# EUROPÄISCHE PATENTANMELDUNG

(11) **EP 3 045 329 A2**
(43) Veröffentlichungstag der Anmeldung: **20.07.2016**
(21) Anmeldenummer: 16151295.9
(22) Anmeldetag: 14.01.2016
(51) Int. Cl.: B60D 1/06, B60R 9/06

(54) **ANHÄNGERKUPPLUNG FÜR EIN LANDFAHRZEUG, KUPPLUNGSSYSTEM FÜR EIN LANDFAHRZEUG UND ERWEITERTES KUPPLUNGSSYSTEM FÜR EIN LANDFAHRZEUG**

(30) Priorität: 16.01.2015 DE 102015100604
(71) Anmelder: Zech, Burkhard, 86441 Zusmarshausen (DE)
(72) Erfinder: Zech, Burkhard, 86441 Zusmarshausen (DE)
(74) Vertreter: Otten, Roth, Dobler & Partner mbB Patentanwälte

(57) **Zusammenfassung**

Die Erfindung betrifft eine Anhängerkupplung (1) für ein Landfahrzeug (13), an welcher eine Trageinrichtung befestigbar ist, wobei die Anhängerkupplung (1) einen Kugelkopf (2) und einen Hals (3) umfasst, wobei der Hals (3) einen ersten Halsabschnitt (4) und einen zweiten Halsabschnitt (8) umfasst, wobei der erste Halsabschnitt (4) einen gegenüber dem ersten Halsabschnitt (4) als Verdickung (6) ausgeführten Halteabschnitt (7) umfasst. Hierbei umfasst der zweite Halsabschnitt (8) einen zweiten Halteabschnitt (10), wobei der zweite Halteabschnitt (10) gegenüber dem zweiten Halsabschnitt (8) als Verdickung (11) oder Verjüngung ausgeführt ist und wobei der zweite Halteabschnitt (10) in Fahrtrichtung (x) betrachtet in der Draufsicht oder in der Seitenansicht mit einem Abstand (ax) vor dem ersten Halteabschnitt (7) an dem Hals (3) der Anhängerkupplung (1) angeordnet ist.

## Beschreibung

Die Erfindung betrifft eine Anhängerkupplung für ein Landfahrzeug, ein Kupplungssystem für ein Landfahrzeug und ein erweitertes Kupplungssystem für ein Landfahrzeug gemäß dem Oberbegriff des Anspruchs 1 bzw. 9 bzw. 14.

Aus der DE 10 2005 026 273 B3 ist eine Anhängerkupplung für ein Landfahrzeug bekannt, an welcher eine Trageinrichtung bzw. ein Lastenträger befestigbar ist, die Anhängerkupplung umfasste einen Kugelkopf und einen Hals, wobei der Hals einen ersten Halsabschnitt und einen zweiten Halsabschnitt umfasst, wobei der erste Halsabschnitt mit dem Kugelkopf verbunden ist und in einer Funktionsstellung der Anhängekupplung im Wesentlichen senkrecht ausgerichtet ist, wobei der zweite Halsabschnitt mit dem ersten Halsabschnitt verbunden ist und einen von dem ersten Halsabschnitt abweichenden Verlauf aufweist und wobei der erste Halsabschnitt einen gegenüber dem ersten Halsabschnitt als Verdickung ausgeführten Halteabschnitt umfasst.

Es ist Aufgabe der Erfindung, eine Anhängerkupplung für ein Landfahrzeug bzw. ein Kupplungssystem für ein Landfahrzeug bzw. ein erweitertes Kupplungssystem für ein Landfahrzeug vorzuschlagen, durch welches eine Kraftübertragung zwischen der Anhängerkupplung und einer an der Anhängerkupplung befestigbaren Trageinrichtung bei minimalem Montageaufwand weiter optimiert ist.

Diese Aufgabe wird ausgehend von den Merkmalen des Oberbegriffs des Anspruchs 1 bzw. 9 bzw. 14 durch die kennzeichnenden Merkmale des Anspruchs 1 bzw. 9 bzw. 14 gelöst. In den jeweiligen Unteransprüchen sind vorteilhafte und zweckmäßige Weiterbildungen angegeben.

Bei der erfindungsgemäßen Anhängerkupplung umfasst der zweite Halsabschnitt einen zweiten Halteabschnitt, wobei der zweite Halteabschnitt gegenüber dem zweiten Halsabschnitt als Verdickung oder Verjüngung ausgeführt ist und wobei der zweite Halteabschnitt in Fahrtrichtung betrachtet in der Draufsicht oder in der Seitenansicht mit einem Abstand vor dem ersten Halteabschnitt an dem Hals der Anhängerkupplung angeordnet ist. Durch einen zweiten Halteabschnitt, welcher zu dem ersten Halteabschnitt einen horizontalen Abstand aufweist und dem Landfahrzeug näher ist als der erste Halteabschnitt, ist es möglich, eine Kupplungsaufnahme durch eine eindimensionale Aufsteckbewegung bzw. Abziehbewegung mit dem ersten und dem zweiten Halteabschnitt in Verbindung zu bringen bzw. von diesen zu trennen. Durch die Verbindung der Kupplungsaufnahme mit dem zweiten Halteabschnitt wird ein Teil der Last näher am Landfahrzeug in die Anhängerkupplung eingeleitet, so dass die Belastung der Anhängekupplung im Bereich der Kugelkopfkupplung reduziert ist. Trotzdem besteht eine in Bezug auf Nicken, Wanken und Gieren der Kupplungsaufnahme formschlüssige Verbindung zu der Anhängerkupplung.

Weiterhin ist es vorgesehen, die beiden Halteabschnitte mit insgesamt wenigstens vier senkrecht im Raum stehenden Stützflächen auszustatten, wobei die beiden Halteabschnitte jeweils wenigstens je zwei Stützflächen umfassen oder wobei einer der beiden Halteabschnitte wenigstens drei Stützflächen und der andere der beiden Halteabschnitte wenigstens eine Stützfläche umfasst. Durch eine entsprechende Anordnung der Stützflächen ist sichergestellt, dass ein Teil der Last im Beriech des zweiten Halteabschnitts in die Anhängerkupplung eingeleitet wird und dass das oben erwähnte Nicken, Wanken und Gieren der Kupplungsaufnahme wirksam unterbunden wird.

Es ist auch vorgesehen, wenigstens einen der beiden Halteabschnitte mit einer weiteren Stützfläche auszustatten, wobei die weitere Stützfläche als nach oben gerichtete, insbesondere waagrecht im Raum liegende Auflagefläche ausgebildet ist. Hierdurch ist es möglich, die vertikale Ausrichtung der Kupplungsaufnahme zu der Anhängerkupplung festzulegen und somit bei jeder Montage wieder die gleiche Ausrichtung zu dem Landfahrzeug herzustellen. Insbesondere bei einer Ausbildung der Auflagefläche an dem zweiten Halteabschnitt erfolgt auch dort eine weitere Einleitung der Last des Tragelements, welche entweder durch das Tragelement selbst oder durch das Tragelement und von dem Tragelement getragene Lasten gebildet ist. Durch eine wenigstens teilweise Abstützung der Kupplungsaufnahme auf dem zweiten Halteabschnitt ist ein Hebelarm, mit welchem die Last in das Landfahrzeug eingeleitet wird, verkürzt.

Weiterhin ist es vorgesehen, dass der erste Halteabschnitt entlang seiner Längsmittelachse von einer Mittelachse des Kugelkopfes der Anhängerkupplung durchlaufen wird und dass der zweite Halteabschnitt entlang seiner Längsmittelachse von einer Mittelachse des zweiten Halsabschnitts der Anhängerkupplung durchlaufen wird. Durch eine derartige Ausrichtung der Haltabschnitte lässt sich eine Anhängerkupplung mit kompakten Abmessungen und hohen Widerstandsmomenten erreichen.

Es ist auch vorgesehen, den ersten und/oder den zweiten Halteabschnitt in der Form eines geometrischen Körpers mit wenigstens einem ersten Paar von insbesondere parallel gegenüberliegenden Stützflächen und insbesondere einem zweiten Paar von insbesondere parallel gegenüberliegenden Stützflächen vorzusehen. Durch die gegenüber liegende Anordnung der Stützflächen lassen sich die auftretenden Drehmomente in beide Drehrichtungen einfach und zuverlässig abfangen.

Hierbei ist es insbesondere vorgesehen, dem ersten und/oder dem zweiten Halteabschnitt die Form eines quaderähnlichen Körpers und insbesondere eines würfelähnlichen Körpers zu geben. Derartige Halteabschnitte lassen sich fertigungstechnisch an dem Hals der Anhängerkupplung einfach herstellen.

Weiterhin ist es vorgesehen, die Längsmittelachse des zweiten Halteabschnitts zu einer an der Fahrtrichtung ausgerichteten Horizontalen in Fahrtrichtung betrachtet in einem Winkel von -45° bis +45° und insbesondere von -15° bis +15° und vorzugsweise etwa 0° auszurichten. Hierdurch wird ein Zusammenwirken der Kupplungsaufnahme mit den beiden Halteabschnitten vereinfacht, da diese durch ihre unterschiedliche Ausrichtung dann eine Vielzahl an Befestigungsmöglichkeiten bieten.

Es ist auch vorgesehen, den ersten Halteabschnitt mit wenigstens einer Stützfläche über eine Projektion des Kugelkopfes in Richtung der Längsmittelsachse des Halteabschnitts überstehen zu lassen oder den ersten Halteabschnitt mit allen Stützflächen über eine Projektion des Kugelkopfes in Richtung der Längsmittelsachse des Halteabschnitts überstehen zu lassen. Hierdurch ist es möglich, eine Kupplungsaufnahme über den Kupplungskopf auf den ersten Halteabschnitt aufzustecken und diese durch ein formschlüssiges Zusammenwirken mit dem ersten Halteabschnitt gegen ein Gieren um die Längsmittelachse des ersten Halteabschnitts abzusichern.

Bei dem erfindungsgemäßen Kupplungssystem für ein Landfahrzeug, welches eine Anhängerkupplung nach wenigstens einem der vorhergehenden Ansprüche und eine Trageinrichtung umfasst, welche wiederum eine Kupplungsaufnahme und ein Tragelement umfasst, ist die Kupplungsaufnahme derart auf die Anhängerkupplung und deren Halteabschnitte angepasst, dass zwischen der Kupplungsaufnahme und der Anhängerkupplung ein Formschluss herstellbar ist, welcher ein Gieren der Kupplungsaufnahme gegenüber der Anhängerkupplung um eine senkrecht zu einer Fahrtrichtung des Landfahrzeugs stehende Hochachse unterbindet und welcher ein Wanken der Kupplungsaufnahme gegenüber der Anhängerkupplung um eine in Fahrtrichtung des Landfahrzeugs verlaufende Längsachse unterbindet und welcher ein Nicken der Kupplungsaufnahme gegenüber der Anhängerkupplung um eine quer zur Fahrtrichtung des Landfahrzeugs verlaufende Querachse unterbindet, wobei die Kupplungsaufnahme zusammen mit dem Tragelement derart von der Anhängerkupplung abstützbar ist, dass eine Last der Trageinrichtung auf die Anhängerkupplung übertragbar ist. Durch den zweiten Halteabschnitt, welcher zu dem ersten Halteabschnitt einen horizontalen Abstand aufweist, ist die Kupplungsaufnahme in Bezug auf Nicken, Wanken und Gieren sicher auf der Anhängerkupplung gehalten.

Es ist vorgesehen, die Trageinrichtung mit ihrer Kupplungsaufnahme in Richtung einer Mittelachse des Kugelkopfes derart mit der Anhängerkupplung zu verbinden, dass die Kupplungsaufnahme auf dem Kugelkopf und/oder auf wenigstens einem der beiden Halteabschnitte aufliegt. Hierdurch weist die Kupplungsaufnahme eine definierte Position zu der Anhängerkupplung auf.

Es ist auch vorgesehen, die Kupplungsaufnahme mit einem Sicherungsmittel auszustatten, durch welches die Kupplungsaufnahme derart mit der Anhängerkupplung verbindbar ist, dass die Kupplungsaufnahme gegen ein Abheben in Richtung einer Mittelachse des Kugelkopfes gesichert ist. Hierdurch ist die Kupplungsaufnahme zuverlässig an der Anhängerkupplung gehalten.

Die Kupplungsaufnahme ist derart ausgeführt, dass diese in ihrer gekuppelten Stellung sowohl flächig an dem ersten Halteabschnitt als auch flächig an dem zweiten Halteabschnitt anliegt. Durch die flächigen Anlagen wird ein geringes Spiel zwischen der Anhängerkupplung und der Kupplungsaufnahme garantiert.

Weiterhin ist es vorgesehen, dass die Kupplungsaufnahme in ihrer gekuppelten Stellung derart mit der Anhängerkupplung verbunden ist, dass der Kupplungskopf der Anhängerkupplung über die Kupplungsaufnahme hinaussteht und mit einer weiteren Kupplungsaufnahme, welche insbesondere Bestandteil eines Anhängers ist, verbindbar ist, so dass an der Anhängerkupplung sowohl die mittels der ersten Kupplungsaufnahme verbundene Trageinrichtung befestigt ist als auch der mittels der zweiten Kupplungsaufnahme verbundene Anhänger befestigbar ist. Hierdurch ist es möglich, den Anhänger mittels der zweiten Kupplungsaufnahme in herkömmlicher Weise mit der Anhängerkupplung zu verbinden und den Anhänger mittels der ersten Kupplungsaufnahme zusätzlich an der Anhängerkupplung abzustützen.

Das erfindungsgemäße, erweitertes Kupplungssystem für ein Landfahrzeug umfasst eine Anhängerkupplung und eine Trageinrichtung sowie einen Anhänger, wobei die Trageinrichtung insbesondere nach wenigstens einem der Ansprüche 9 bis 13 ausgebildet ist, wobei die Trageinrichtung eine erste Kupplungsaufnahme und ein Tragelement umfasst und wobei der Anhänger eine zweite Kupplungsaufnahme umfasst, wobei die erste Kupplungsaufnahme in ihrer gekuppelten Stellung derart mit der Anhängerkupplung verbunden ist, dass der Kupplungskopf der Anhängerkupplung über die erste Kupplungsaufnahme hinaussteht und dass der Anhänger mit der zweiten Kupplungsaufnahme mit dem Kugelkopf der Anhängerkupplung verbunden ist, so dass die Halteabschnitte der Anhängerkupplung die Trageinrichtung halten und so dass der Kugelkopf der Anhängerkupplung den Anhänger hält. Hierdurch ist es möglich, den Anhänger mittels der zweiten Kupplungsaufnahme in herkömmlicher Weise mit der Anhängerkupplung zu verbinden und den Anhänger mittels der ersten Kupplungsaufnahme an der Anhängerkupplung abzustützen.

Schließlich ist es vorgesehen, dass bei dem erweitertem Kupplungssystem die Trageinrichtung als Tragelement eine quer zur Fahrrichtung ausgerichtete Befestigungsschiene umfasst und dass das erweitere Kupplungssystem wenigstens ein Dämpfungsmittel umfasst, welches seitlich neben der Anhängerkupplung zwischen der Befestigungsschiene und dem Anhänger angeordnet ist. Hierdurch reichen aufgrund der Hebelverhältnisse Dämpfungsmittel mit geringer Stärke aus, um beispielsweise im Fahrbetrieb ein Schlingern des Anhängers zu vermeiden.

Weitere Einzelheiten der Erfindung werden in der Zeichnung anhand von schematisch dargestellten Ausführungsbeispielen beschrieben.

Hierbei zeigt:
- Figur 1a bis 1c:: eine erfindungsgemäße Anhängerkupplung in drei unterschiedlichen Ansichten;
- Figur 2a bis 2c:: die aus den Figuren 1a bis 1c bekannte Anhängerkupplung mit einer auf dieser befestigten Trageinrichtung in drei unterschiedlichen Ansichten bzw. ein erfindungsgemäßes Kupplungssystem in drei unterschiedlichen Ansichten und
- Figur 3a, 3b:: ein Draufsicht auf ein Kupplungssystem bzw. ein erweitertes Kupplungssystem in zwei unterschiedlichen Stellungen.

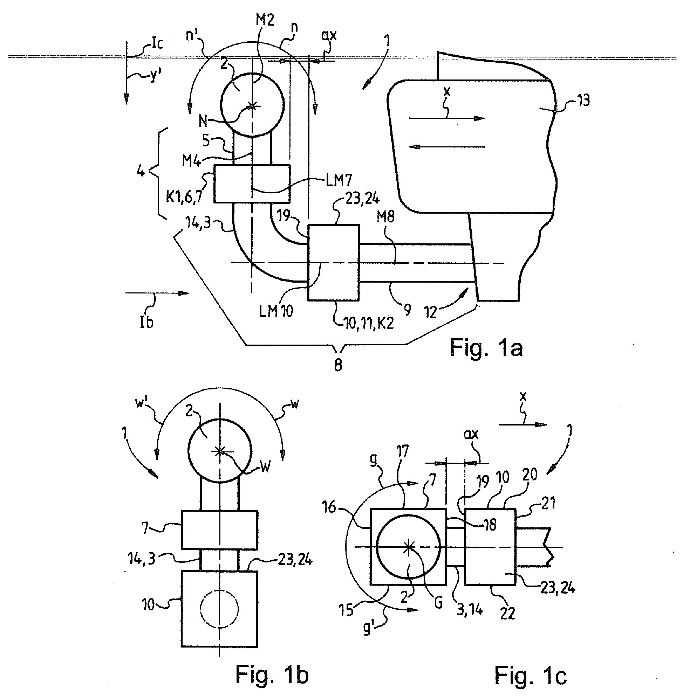

In den Figuren 1a bis 1c ist eine erfindungsgemäße Anhängerkupplung 1 in einer Seitenansicht, einer Rückansicht aus der Pfeilrichtung Ib und einer Draufsicht in die Pfeilrichtung Ic dargestellt. Die in der Figur 1a in ihrer Funktionsstellung gezeigte Anhängerkupplung 1 umfasst einen Kugelkopf 2 und einen Hals 3. Der Hals 3 umfasst einen ersten Halsabschnitt 4 und einen zweiten Halsabschnitt 8. Hierbei ist der erste Halsabschnitt 4 mit dem Kugelkopf 2 verbunden und ist mit seiner Mittelachse M4 in einer Funktionsstellung der Anhängerkupplung 1 im Wesentlichen senkrecht im Raum ausgerichtet. Der erste Halsabschnitt 4 umfasst neben einem rohrähnlichen Grundköper 5 einen als Verdickung 6 ausgeführten Halteabschnitt 7 mit einer Längsmittelachse LM7, welcher beabstandet zu dem Kugelkopf 2 an dem Grundkörper 5 angeordnet ist. Der zweite Halsabschnitt 8 weist mit einer Mittelachse M8 einen von dem ersten Halsabschnitt 4 abweichenden Verlauf auf und umfasst neben einem rohrähnlichen Grundköper 9 einen zweiten Halteabschnitt 10 mit einer Längsmittelachse LM10, welcher als Verdickung 11 ausgeführt ist. Die Längsmittelachse LM7 des ersten Halteabschnitts 7 bildet auch eine Mittelachse M2 des Kugelkopfes 2. Im Bereich des zweiten Halteabschnitts 10 liegt dessen Längsmittelachse LM10 auf der Mittelachse M8 des zweiten Halsabschnitts 8. Weiterhin liegt die Längsmittelachse LM10 parallel zu der Fahrtrichtung x.

Gemäß einer nicht dargestellten Ausführungsvariante ist es auch vorgesehen, den zweiten Halteabschnitt als Verjüngung bzw. Rücksprung auszuführen.

Der Hals 3 der Anhängerkupplung 1 ist mit einem freien Ende 12 in herkömmlicher Weise an einem Landfahrzeug 13 befestigt. Die Mittelachse M4 des ersten Halsabschnitts 4 ist hierbei etwa senkrecht zu einer Fahrtrichtung x ausgerichtet. Bei einer Betrachtung in Seitenansicht, wie diese die Figur 1a zeigt, bzw. bei einer Betrachtung in Draufsicht, wie diese die Figur 1c zeigt, ist der zweite Halteabschnitt 10 in der Fahrtrichtung x vor dem ersten Halteabschnitt 7 angeordnet und weist zu diesem einen Abstand ax auf. Der Hals 3 ist als abschnittsweise gebogenes Rundrohr 14 ausgeführt und der erste Halteabschnitt 7 sowie der zweite Halteabschnitt 10 sind als geometrische Körper K1, K2 in Form von quaderförmigen bzw. quaderähnlichen Verdickungen 6 bzw. 11 ausgeführt.

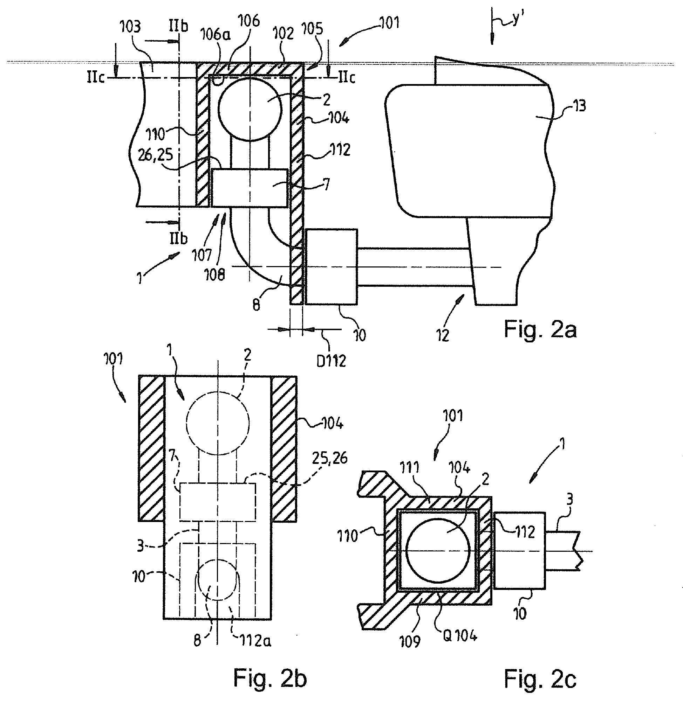

Hierdurch ist es möglich, eine in den Figuren 2a bis 2c im Zusammenwirken mit der Anhängerkupplung 1 gezeigte Trageinrichtung 101 durch eine Aufsteckbewegung in eine Pfeilrichtung y' derart mit der Anhängerkupplung 1 zu verbinden, dass sowohl ein Nicken der Trageinrichtung 101 in Nickrichtungen n, n' um eine quer zu der Fahrtrichtung x orientierte Nickachse bzw. Querachse N des Kugelkopfes 2 unterbunden ist (siehe Figur 1a), als auch ein Wanken der Trageinrichtung 101 in Wankrichtungen w, w' um eine in die Fahrtrichtung x verlaufende Wankachse bzw. Längsachse W unterbunden ist (siehe Figur 1b) sowie auch eine Gieren der Trageinrichtung 101 in Gierrichtungen g, g' um eine senkrecht zu der Fahrtrichtung x stehende Gierachse bzw. Hochachse G unterbunden ist (siehe Figur 1c).

In den Figuren 2a bis 2c ist analog zu den Darstellungen der Figuren 1a bis 1c nochmals die Anhängerkupplung 1 in drei unterschiedlichen Ansichten gezeigt, wobei zusätzlich die bereits erwähnte Trageinrichtung 101 in auf der Anhängerkupplung 1 montiertem Zustand dargestellt ist. Die Trageinrichtung 101 umfasst eine Kupplungsaufnahme 102 und ein mit der Kupplungsaufnahme 102 verbundenes Tragelement 103. Das Tragelement 103 ist in den Figuren 2a bis 2c nur teilweise dargestellt und ist z.B. als Tragkorb für Gepäckstücke oder als Fahrradhalter ausgeführt. Wie aus einer Zusammenschau der Figuren 2a bis 2c hervorgeht umfasst die Kupplungsaufnahme 102 eine Hülse 104 mit einem rechteckförmigen Innenquerschnitt Q104, welche an einem ersten Ende 105 durch einen Deckel 106 verschlossen ist und welche zu einem zweiten Ende 107 eine Öffnung 108 aufweist. Die Hülse 104 umfasst vier Seitenwände 109, 110, 111 und 112, wobei die Seitenwand 112 über die Öffnung 108 hinaus verlängert ist. Die Trageinrichtung 101 ist in ihrer montierten Stellung so auf die Anhängerkupplung 1 in die Pfeilrichtung y' aufgesteckt, dass die vier Seitenwände 109 bis 112 an sich paarweise parallel gegenüberliegenden Stützflächen 15, 16, 17 und 18 (siehe Figur 1c) der ersten Halteeinrichtung 7 anliegen und eine Innenseite 106a ihres Deckels 106 auf dem Kugelkopf 2 der Anhängerkupplung 1 aufliegt. Weiterhin erstreckt sich die verlängerte Seitenwand 112 über den ersten Halteabschnitt 7 hinaus, so dass diese an einer entgegen der Fahrtrichtung x ausgerichteten Stützfläche 19 (siehe Figur 1a) des zweiten Halteabschnitts 10 anliegt.

Der zweite Halteabschnitt 10 umfasst neben der Stützfläche 19 noch weitere senkrechte Stützflächen 20, 21 und 22 (siehe Figur 1c), wobei sich die Stützflächen 20, 22 und 19, 21 paarweise gegenüber liegen. Weiterhin ist es auch vorgesehen, dass eine nach oben weisende, waagrecht liegende Stützfläche 23 (siehe Figur 1a bis 1c) des zweiten Halteabschnitts 10 eine Auflagefläche 24 bildet, welche bei einer abweichenden Bauform der Kupplungsaufnahme 102 ähnlich wie der Kugelkopf 2 zur Abstützung der Kupplungsaufnahme 102 verwendet werden kann. Eine Dicke D112 (siehe Figur 2a) der verlängerten Seitenwand 112 ist derart auf einen Abstand ax (siehe Figur 1a, 1c) zwischen dem ersten Halteabschnitt 7 und dem zweiten Halteabschnitt 10 abgestimmt, dass sich eine Gleitpassung ergibt, in welche die verlängerte Seitenwand 112 mit minimalem Spiel in Pfeilrichtung y' zwischen die beiden Halteabschnitte 7 und 10 einschiebbar ist. Durch die Abstützung der Trageinrichtung 101 mittels der verlängerten Seitenwand 112 an dem zweiten Halteabschnitt 10 ist insbesondere einem Nicken der Trageinrichtung 101 in die Nickrichtung n' (siehe auch Figur 1a) vorgebeugt. Wie aus der Figur 2b ersichtlich ist, weist die Seitenwand 112 einen Ausschnitt 112a auf, so dass diese über den zweiten Halsabschnitt 8 geschoben werden kann, um in Anlage an die Stützfläche 19 zu kommen. Auch der Ausschnitt 112a ist in Bezug auf den zweiten Halsabschnitt 8 als Gleitpassung ausgeführt, so dass über die Seitenwand 112 im Bereich des zweiten Halteabschnitts 10 auch Gierkräfte und Nickkräfte in die Anhängerkupplung 1 eingeleitet werden können.

Um ein ungewünschtes Abheben der Kupplungsaufnahme 102 bzw. des gesamten Tragelements 101 von der Anhängerkupplung 1 zu verhindern ist es vorgesehen, den Kugelkopf 2 der Anhängerkupplung 1 in der dargestellten Stellung der Kupplungsaufnahme 102 mit einem nicht dargestellten Verriegelungsmittel zu untergreifen, welches mit der Kupplungsaufnahme 102 verbunden ist. Hierbei ist es insbesondere vorgesehen, dass das Verriegelungsmittel einen stangen- oder U-förmigen Verriegelungsbolzen oder eine Klemmschrauben umfasst, welcher bzw. welche an der Hülse 104 geführt bzw. abgestützt ist.

Alternativ ist es auch vorgesehen, eine nach oben weisende Stützfläche 25 des ersten Halteabschnitts 7 als Auflagefläche 26 zu verwenden. Dies ist insbesondere dadurch einfach möglich, dass die Auflagefläche 26 bzw. die die Auflagefläche begrenzenden Stützflächen 15 bis 18 (siehe auch Figur 1c) in Draufsicht betrachtet - siehe Figur 2c - über den Kugelkopf 2 hervorstehen, so dass eine entsprechend gestaltete Kupplungsaufnahme über den Kupplungskopf aufsteckbar ist.

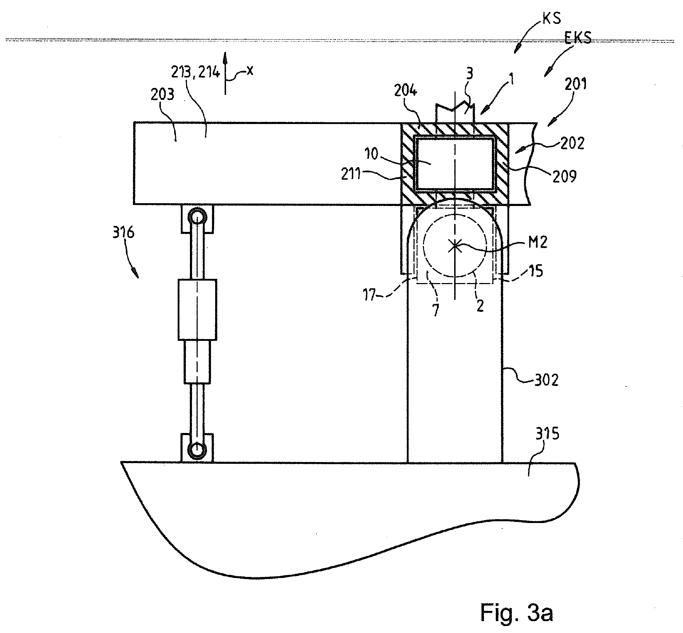

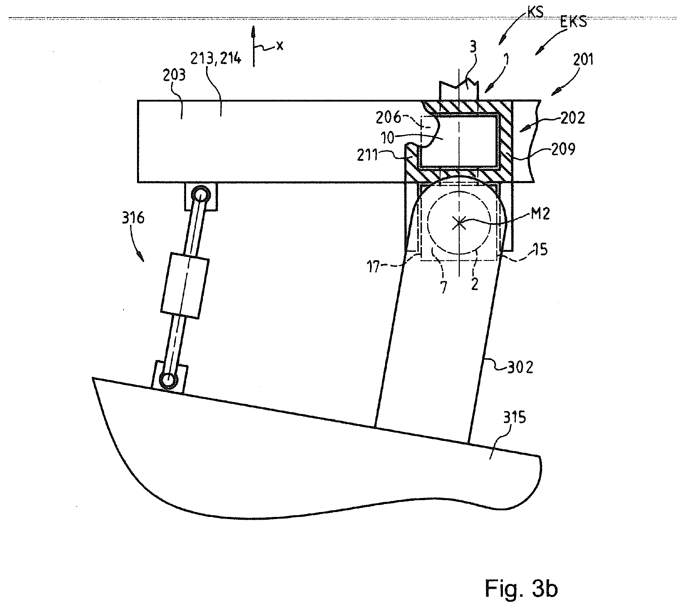

In der Figur 3 ist eine Draufsicht auf ein Kupplungssystem KS gezeigt. Das Kupplungssystem KS umfasst die in den Figuren 1a bis 1c gezeigte Anhängerkupplung 1 und eine Trageinrichtung 201. Bezüglich der Ausführung der Anhängerkupplung 1 wird ausdrücklich auf die oben stehende Beschreibung verwiesen. Die Trageinrichtung 201 ist wie auch die oben beschriebene Trageinrichtung 101 mit ihrer Kupplungsaufnahme 202 derart ausgeführt, dass diese von oben in Richtung des Verlaufs der Mittelachse M2 des Kugelkopfes 2 auf die Anhängerkupplung 1 aufgesetzt ist. Mit einer Hülse 204 umgreift die Kupplungsaufnahme 202 den zweiten Halteabschnitt 10 der Anhängerkupplung 1, wobei die Hülse 204 in der Figur 3a abgeschnitten dargestellt ist, so dass ein Deckel 206 (siehe Figur 3b), mit welchem die Kupplungsaufnahme 202 in der montierten Stellung auf dem zweiten Halteabschnitt 10 aufliegt nicht sichtbar ist. Seitenwände 209 und 211 der Hülse 204 sind entgegen der Fahrrichtung x nach hinten so verlängert, dass diese an en Stützflächen 15, 17 des ersten Halteabschnitts 7 anliegen und diesen zwischen sich einklemmen. Ein Tragelement 203 der Trageinrichtung 201 ist als Befestigungsschiene 213 ausgebildet, welche einen quer zu der Fahrtrichtung x stehenden Balken 214 bildet, welcher durch die Kupplungsaufnahme 202 gegen Gieren, Nicken und Wanken an der Anhängerkupplung 1 abgestützt ist. In der Fahrtrichtung x vor der Trageinrichtung 201 ist ein Abschnitt des Halses 3 der Anhängerkupplung 1 zu sehen, welcher zu dem nicht dargestellten Landfahrzeug führt. Über eine weitere Kupplungsaufnahme 302 ist ein Anhänger 315 an den Kugelkopf 2 der Anhängerkupplung 1 angekuppelt, so dass dieser in herkömmlicher Weise mittels der Anhängerkupplung 1 von dem Landfahrzeug gezogen werden kann. Weiterhin ist zwischen der Befestigungsschiene 213 und dem Anhänger 315 beabstandet von der weiteren Kupplungsaufnahme 302 ein Dämpfungsmittel 316 angeordnet. Durch das Dämpfungsmittel 316 wird eine Drehbewegung des Anhängers 315, welche dieser bei Kurvenfahrten um die Mittelachse M2 des Kugelkopfes 2 ausführt, gebremst bzw. gedämpft. Hierdurch kann ein ungewünschtes Schlingern des Anhängers 315 in kritischen Fahrsituationen unterbunden werden. In der Figur 3b ist der Anhänger 315 in einer Stellung dargestellt, welche dieser beim Durchfahren einer Linkskurve einnimmt. In dieser Stellung ist das Dämpfungsmittel 316, welches drehbar an der Befestigungsschiene 213 und drehbar an dem Anhänger 315 angelenkt ist, zusammengedrückt. Bei sich wieder einstellender Geradeausfahrt wird das Dämpfungsmittel 316 wieder auseinandergezogen, so dass sich wieder die in der Figur 3a gezeigte Stellung einstellt. Beim Durchfahren einer Rechtskurve wird das Dämpfungsmittel 316 weiter auseinander gezogen. Um ein gleichmäßiges Dämpfungsverhalten zu erreichen, ist es vorgesehen, auch rechts neben der weiteren Kupplungsaufnahme 302 ein Dämpfungsmittel zwischen der Befestigungsschiene 213 und dem Anhänger 315 anzuordnen, welches mit der Befestigungsschiene 213 und dem Anhänger 315 ebenfalls drehbar verbunden ist. Die Anhängerkupplung 1, die Trageinrichtung 201, die Kupplungsaufnahme 302, der Anhänger 315 und das wenigstens eine Dämpfungsmittel 316 bilden zusammen ein erweitertes Kupplungssystem EKS.

Mit Bezug auf die Figuren 1a bis 2c wird weiterhin ausgeführt, dass die zu dem Landfahrzeug 13 weisende Stützfläche 18 der ersten Verdickung 6 und die von dem Landfahrzeug 13 weg weisende Stützfläche 19 der zweiten Verdickung 11 parallel und beabstandet zueinander ausgerichtet sind. Hierbei ist der Abstand ax zwischen den beiden Stützflächen 18 und 19 so bemessen, dass die auf die Anhängerkupplung 1 aufsteckbare Hülse 104 der Trageinrichtung 101 mit ihrer Seitenwand 112 zwischen die Stützflächen 18 und 19 einsteckbar ist und hierbei mit einer Innenseite ihrer Seitenwand 112 an der Stützfläche 18 anliegt und hierbei mit einer Außenseite ihrer Seitenwand 112 an der Stützfläche 19 anliegt.

### Bezugszeichenliste:

- 1: Anhängerkupplung
- 2: Kugelkopf
- 3: Hals
- 4: erster Halsabschnitt von 3
- 5: rohrähnlicher Grundköper
- 6: Verdickung an 4
- 7: erster Halteabschnitt
- 8: zweiter Halsabschnitt von 3
- 9: rohrähnlicher Grundköper
- 10: zweiter Halteabschnitt
- 11: Verdickung an 8
- 12: freies Ende von 1
- 13: Landfahrzeug
- 15 - 18: Stützfläche von 7
- 19: Stützfläche von 7
- 20 - 22: senkrechte Stützflächen von 10
- 23: Stützfläche von 10
- 24: Auflagefläche von 10
- 25: Stützfläche von 7
- 26: Auflagefläche von 7

- 101: Trageinrichtung
- 102: Kupplungsaufnahme von 101
- 103: Tragelement von 101
- 104: Hülse
- 105: erstes Ende von 104
- 106: Deckel von 104
- 106a: Innenseite von 106
- 107: zweiten Ende 1von 104
- 108: Öffnung von 104
- 109 - 112: Seitenwände von 104
- 112a: Ausschnitt 112a

- 201: Trageinrichtung
- 202: Kupplungsaufnahme von 101
- 203: Tragelement von 101
- 204: Hülse
- 206: Deckel
- 209, 211: Seitenwand von 204
- 213: Befestigungsschiene 213
- 214: Balken 214

- 302: weitere Kupplungsaufnahme 302
- 315: Anhänger 315
- 316: Dämpfungsmittel 316

- ax: Abstand zwischen 7 und 10
- D112: Dicke von 112
- EKS: erweitertes Kupplungssystem
- g, g': Gierrichtung
- G: Gierachse bzw. Hochachse
- M2: Mittelachse von 2
- M4: Mittelachse von 4
- M8: Mittelachse von 8
- KS: Kupplungssystem KS
- K1, K2: geometrischer Körper
- LM7: Längsmittelachse von 7
- LM10: Längsmittelachse von 10
- n, n': Nickrichtung
- N: Nickachse bzw. Querachse
- Q104: rechteckförmiger Innenquerschnitt von 104
- w, w': Wankrichtung
- W: Wankachse bzw. Längsachse
- x: Fahrtrichtung
- y': Pfeilrichtung

## Patentansprüche

1. Anhängerkupplung (1) für ein Landfahrzeug (13), an welcher eine Trageinrichtung (101; 201) befestigbar ist, umfassend
- einen Kugelkopf (2) und einen Hals (3), wobei der Hals (3) einen ersten Halsabschnitt (4) und einen zweiten Halsabschnitt (8) umfasst,
- wobei der erste Halsabschnitt (4) mit dem Kugelkopf (2) verbunden ist und in einer Funktionsstellung der Anhängekupplung (1) im Wesentlichen senkrecht ausgerichtet ist,
- wobei der zweite Halsabschnitt (8) mit dem ersten Halsabschnitt (4) verbunden ist und einen von dem ersten Halsabschnitt (4) abweichenden Verlauf aufweist,
- wobei der erste Halsabschnitt (4) einen gegenüber dem ersten Halsabschnitt (4) als Verdickung (6) ausgeführten Halteabschnitt (7) umfasst,
**dadurch gekennzeichnet,**
- **dass** der zweite Halsabschnitt (8) einen zweiten Halteabschnitt (10) umfasst,
- wobei der zweite Halteabschnitt (10) gegenüber dem zweiten Halsabschnitt (8) als Verdickung (11) oder Verjüngung ausgeführt ist und
- wobei der zweite Halteabschnitt (10) in Fahrtrichtung (x) betrachtet in der Draufsicht oder in der Seitenansicht mit einem Abstand (ax) vor dem ersten Halteabschnitt (7) an dem Hals (3) der Anhängerkupplung (1) angeordnet ist.

2. Anhängerkupplung nach Anspruch 1, **dadurch gekennzeichnet, dass** die beiden Halteabschnitte (7; 11) insgesamt wenigstens vier senkrecht im Raum stehenden Stützflächen (15 - 18; 19 - 22) umfassen, wobei die beiden Halteabschnitte (7; 11) jeweils wenigstens je zwei Stützflächen (15 - 18; 19 - 22) umfassen oder wobei einer der beiden Halteabschnitte (7; 11) wenigstens drei Stützflächen (15 - 18; 19 - 22) und der andere der beiden Halteabschnitte wenigstens eine Stützfläche (15 - 18; 19 - 22) umfasst.

3. Anhängerkupplung nach wenigsten einem der vorhergehenden Ansprüche, **dadurch gekennzeichnet, dass** wenigstens einer der beiden Halteabschnitte (7; 11) eine weitere Stützfläche (25; 23) umfasst, wobei diese als nach oben gerichtete, insbesondere waagrecht im Raum liegende Auflagefläche (26; 24) ausgebildet ist.

4. Anhängerkupplung nach wenigsten einem der vorhergehenden Ansprüche, **dadurch gekennzeichnet, dass** der erste Halteabschnitt (7) entlang seiner Längsmittelachse (LM7) von einer Mittelachse (M2) des Kugelkopfes (2) der Anhängerkupplung (1) durchlaufen ist und dass der zweite Halteabschnitt (10) entlang seiner Längsmittelachse (LM10) von einer Mittelachse (M8) des zweiten Halsabschnitts (8) der Anhängerkupplung (1) durchlaufen ist.

5. Anhängerkupplung nach Anspruch 4, **dadurch gekennzeichnet, dass** der erste und/oder der zweite Halteabschnitt (7; 11) die Form eines geometrischen Körpers (K1; K2) mit wenigstens einem ersten Paar von insbesondere parallel gegenüberliegenden Stützflächen (15, 17; 16, 18; 19, 21; 20, 22) und insbesondere einem zweiten Paar von insbesondere parallel gegenüberliegenden Stützflächen (15, 17; 16, 18; 19, 21; 20, 22) aufweist.

6. Anhängerkupplung nach Anspruch 5, **dadurch gekennzeichnet, dass** der erste und/oder der zweite Halteabschnitt (7; 11) die Form eines quaderähnlichen Körpers (6; 11) und insbesondere eines würfelähnlichen Körpers aufweist.

7. Anhängerkupplung nach wenigsten einem der vorhergehenden Ansprüche, **dadurch gekennzeichnet, dass** die Längsmittelachse (LM10) des zweiten Halteabschnitts (10) zu einer an der Fahrtrichtung (x) ausgerichteten Horizontalen in Fahrtrichtung (x) betrachtet einen Winkel von -45° bis +45° und insbesondere von -15° bis +15° und vorzugsweise etwa 0° aufweist.

8. Anhängerkupplung nach wenigsten einem der vorhergehenden Ansprüche, **dadurch gekennzeichnet, dass** der erste Halteabschnitt (7) mit wenigstens einer Stützfläche (15 - 18) über eine Projektion des Kugelkopfes (2) in Richtung der Längsmittelsachse (LM7) des Halteabschnitts (7) übersteht oder dass der erste Halteabschnitt (7) mit allen Stützflächen (15 - 18) über eine Projektion des Kugelkopfes (2) in Richtung der Längsmittelsachse (LM7) des Halteabschnitts (7) übersteht.

9. Kupplungssystem (KS) für ein Landfahrzeug (13) umfassend eine Anhängerkupplung (1) nach wenigstens einem der vorhergehenden Ansprüche und eine Trageinrichtung (101; 201), wobei die Trageinrichtung (101; 201) eine Kupplungsaufnahme (102; 202) und ein Tragelement (103; 203) umfasst, **dadurch gekennzeichnet,**
- **dass** die Kupplungsaufnahme (102; 202) derart auf die Anhängerkupplung (1) und deren Halteabschnitte (7; 10) angepasst ist, dass zwischen der Kupplungsaufnahme (102; 202) und der Anhängerkupplung (1) ein Formschluss herstellbar ist,
- welcher ein Gieren der Kupplungsaufnahme (102; 202) gegenüber der Anhängerkupplung (1) um eine senkrecht zu einer Fahrtrichtung (x) des Landfahrzeugs (13) stehende Hochachse (G) unterbindet und
- welcher ein Wanken der Kupplungsaufnahme (102; 202) gegenüber der Anhängerkupplung (1) um eine in Fahrtrichtung (x) des Landfahrzeugs (13) verlaufende Längsachse (W) unterbindet und
- welcher ein Nicken der Kupplungsaufnahme (102; 202) gegenüber der Anhängerkupplung (1) um eine quer zur Fahrtrichtung (x) des Landfahrzeugs (13) verlaufende Querachse (N) unterbindet und
- wobei die Kupplungsaufnahme (102; 202) zusammen mit dem Tragelement (103; 203) derart von der Anhängerkupplung (1) abgestützt ist, dass eine Gewichtskraft der Trageinrichtung (101; 201) an der Anhängerkupplung (1) abgestützt ist.

10. Kupplungssystem nach Anspruch 9, **dadurch gekennzeichnet, dass** die Trageinrichtung (101; 201) mit ihrer Kupplungsaufnahme (102; 202) in Richtung einer Mittelachse (M2) des Kugelkopfes (2) derart auf die Anhängerkupplung (1) aufgesetzt ist, dass die Kupplungsaufnahme (102; 202) auf dem Kugelkopf (2) und/oder auf wenigstens einem der beiden Halteabschnitte (7; 10) aufliegt.

11. Kupplungssystem nach Anspruch 9 oder 10, **dadurch gekennzeichnet, dass** die Kupplungsaufnahme (102; 202) ein Sicherungsmittel umfasst, durch welches die Kupplungsaufnahme (102; 202) derart mit der Anhängerkupplung (1) verbindbar ist, dass die Kupplungsaufnahme (102; 202) gegen ein Abheben in Richtung einer Mittelachse (M2) des Kugelkopfes (2) gesichert ist.

12. Kupplungssystem nach Anspruch 9 oder 10 oder 11, **dadurch gekennzeichnet, dass** die Kupplungsaufnahme (102; 202) in ihrer gekuppelten Stellung sowohl flächig an dem ersten Halteabschnitt (7) als auch flächig an dem zweiten Halteabschnitt (10) anliegt.

13. Kupplungssystem nach Anspruch 9 oder 10 oder 11 oder 12, **dadurch gekennzeichnet, dass** die Kupplungsaufnahme (102; 202) in ihrer gekuppelten Stellung derart mit der Anhängerkupplung (1) verbunden ist, dass der Kupplungskopf (2) der Anhängerkupplung (1) über die Kupplungsaufnahme (102; 202) hinaussteht und mit einer weiteren Kupplungsaufnahme (302), welche insbesondere Bestandteil eines Anhängers (315) ist, verbindbar ist, so dass an der Anhängerkupplung (1) sowohl die mittels der ersten Kupplungsaufnahme (102; 202) verbundene Trageinrichtung (101; 201) befestigt ist als auch der mittels der zweiten Kupplungsaufnahme (302) verbundene Anhänger (315) befestigbar ist.

14. Erweitertes Kupplungssystem (EKS) für ein Landfahrzeug (13) umfassend eine Anhängerkupplung (1) und eine Trageinrichtung (101; 201) insbesondere nach wenigstens einem der Ansprüche 9 bis 13 sowie einen Anhänger (315), wobei die Trageinrichtung (101; 201) eine erste Kupplungsaufnahme (102; 202) und ein Tragelement (103; 203) umfasst und wobei der Anhänger (315) eine zweite Kupplungsaufnahme (302) umfasst, **dadurch gekennzeichnet, dass** die erste Kupplungsaufnahme (102; 202) in ihrer gekuppelten Stellung derart mit der Anhängerkupplung (1) verbunden ist, dass der Kupplungskopf (2) der Anhängerkupplung (1) über die erste Kupplungsaufnahme (102; 202) hinaussteht und dass der Anhänger (315) mit der zweiten Kupplungsaufnahme (302) mit dem Kugelkopf (2) der Anhängerkupplung (1) verbunden ist, so dass die Halteabschnitte (7; 10) der Anhängerkupplung (1) die Trageinrichtung (101; 201) halten und so dass der Kugelkopf (2) der Anhängerkupplung (1) den Anhänger (315) hält.

15. Erweitertes Kupplungssystem nach Anspruch 14, **dadurch gekennzeichnet, dass** die Trageinrichtung (101; 201) als Tragelement (103; 203) eine quer zur Fahrrichtung (x) ausgerichtete Befestigungsschiene (213) umfasst und dass das erweitere Kupplungssystem (EKS) wenigstens ein Dämpfungsmittel (316) umfasst, welches seitlich neben der Anhängerkupplung (1) zwischen der Befestigungsschiene (213) und dem Anhänger (315) angeordnet ist.
